# EUROPÄISCHE PATENTANMELDUNG

(11) **EP 4 806 315 A1**
(43) Veröffentlichungstag der Anmeldung: **16.09.2026**
(21) Anmeldenummer: 25162843.4
(22) Anmeldetag: 11.03.2025
(51) Int. Cl.: A47J 43/08, A47J 43/046

(54) **SYSTEM MIT DECKEL EINER KÜCHENMASCHINE**

(71) Anmelder: Vorwerk & Co. Interholding GmbH, 42289 Wuppertal (DE)
(72) Erfinder: MENDE, Stefan, 45665 Recklinghausen (DE)
(74) Vertreter: Gille Hrabal Partnerschaftsgesellschaft mbB Patentanwälte

(57) **Zusammenfassung**

Die Erfindung betrifft System mit einem Deckel (2) für eine Küchenmaschine, mit einer Öffnung im Deckel (2), mit einem Abdeckelement (29) unterhalb der Öffnung, mit einem Zubehör, wobei das Zubehör ein Element umfasst, das so eingerichtet ist, dass dieses durch einen Antrieb der Küchenmaschine (3) angetrieben werden kann, gekennzeichnet durch eine Kraftübertragungseinrichtung, die eine Rotationsbewegung durch die Öffnung im Deckel (2) hindurch übertragen kann.

## Beschreibung

Die Erfindung betrifft ein System umfassend einen Deckel einer Küchenmaschine. Der Deckel ist für einen Topf der Küchenmaschine vorgesehen, in dem ein Nahrungsmittel zubereitet werden kann. Das System kann ein Zubehör für die Küchenmaschine umfassen. Das System kann eine Abdeckung für eine Öffnung im Deckel umfassen. Die Küchenmaschine ist insbesondere eine Haushaltsküchenmaschine, die also für den privaten Gebrauch bestimmt und geeignet ist.

Abdeckungen für Öffnungen von solchen Deckeln sind aus den Druckschriften WO 2015074720 A1, EP 38 155 90 A1 bekannt. Mithilfe von solchen Abdeckungen kann vermieden werden, dass Gargut herausspritzen kann. Diese Abdeckungen sind für kleinere Öffnungen in Deckeln nicht gut geeignet. Kleinere Öffnung können beispielsweise aus Sicherheitsgründen vorgesehen sein. Eine Öffnung kann beispielsweise aus Sicherheitsgründen so ausgestaltet sein, dass kein Finger durch die Öffnung hindurchgesteckt werden kann.

Das Zubehör kann eine Saftpresse sein, wie diese beispielsweise aus der Druckschrift DE 20 2021 105 193 U1 bekannt ist. Das Zubehör kann eine Schneidvorrichtung sein, wie diese beispielsweise aus der Druckschrift DE 20 2022 002 722 U1 bekannt ist. Ein solches Zubehör kann es erfordern, dass eine Welle des Zubehörs mittig durch eine Öffnung im Deckel der Küchenmaschine hindurchgeführt wird. Durch die Welle kann eine Kraft von einem im Topf der Küchenmaschine mittig angeordneten Antrieb auf ein Element des Zubehörs übertragen werden, das sich oberhalb des Deckels befindet.

Das Zubehör kann ein Spiralschneider sein. Ein solcher Spiralschneider kann einen drehbaren Trichter mit einer Schneide in der Wand des Trichters umfassen.

Mit der vorliegenden Erfindung wird das Ziel verfolgt, dass ein Deckel eine Öffnung umfasst, die klein sein kann. Dennoch soll vermieden werden, dass Gargut herausspritzen kann. Insbesondere soll es möglich sein, durch den Deckel hindurch Kräfte auf ein Element eines Zubehörs zu übertragen.

Zur Lösung der Aufgabe ist ein System mit den Merkmalen des ersten Anspruchs vorgesehen. Vorteilhafte Ausgestaltungen ergeben sich aus den abhängigen Ansprüchen.

Das System kann einen Deckel einer Küchenmaschine umfassen. Das System kann ein Zubehör umfassen. Das Zubehör kann dazu dienen, den Funktionsumfang zu erweitern. Das Zubehör kann sich außerhalb des Topfes der Küchenmaschine während seines Betriebes befinden.

Der Deckel des Systems kann zur Lösung der Aufgabe eine Öffnung umfassen. Die Öffnung kann mittig angeordnet sein. Unterhalb der Öffnung kann ein Abdeckelement vorhanden sein. Unterhalb meint die Seite, die in den Topf hineinragt oder in Richtung des Topfbodens gerichtet ist. Das Abdeckelement kann als Spritzschutz dienen. Das Abdeckelement kann in Aufsicht auf die Öffnung gesehen die Öffnung nur teilweise oder vollständig abdecken. Das Abdeckelement kann in Aufsicht auf die Öffnung gesehen die Öffnung überwiegend, aber nicht vollständig abdecken. Das Abdeckelement kann Teil des Deckels sein. Das Abdeckelement kann an dem Rand der Öffnung des Deckels befestigt sein. Für eine Befestigung des Abdeckelements kann der Deckel ein oder mehrere Stege umfassen, die mit dem Abdeckelement verbunden sind. Zwischen dem Abdeckelement und der Öffnung kann es einen Abstand geben. Durch die Öffnung und das Abdeckelement kann mindestens ein Durchgang geschaffen sein, der es ermöglicht, dass beispielsweise Flüssigkeit den Deckel während des Betriebs passieren und so in einen Topf gelangen kann.

Die engste Stelle des Durchgangs kann beispielsweise kleiner als 12 mm sein.

Das Abdeckelement kann so sein, dass eine Welle eines Zubehörs nicht mittig durch die Öffnung hindurchführen kann. Es kann ein Zubehör mit einer Kraftübertragungseinrichtung vorhanden sein. Der durch Öffnung und Abdeckelement geschaffene Durchgang kann so sein, dass durch die Kraftübertragungseinrichtung eine Kraft von einem Antrieb der Küchenmaschine auf ein Element des Zubehörs übertragen werden kann, das sich außerhalb des Topfes der Küchenmaschine während eines Betriebs befinden kann. Während des Betriebs kann sich das Element oberhalb des Deckels befinden.

Die Kraftübertragungseinrichtung kann eine flexible bzw. biegsame Welle oder eine Kardanwelle umfassen, um eine Kraft von einem im Topf der Küchenmaschine mittig angeordneten Antrieb auf ein Element des Zubehörs zu übertragen, das außerhalb des Topfes der Küchenmaschine während des Betriebs angeordnet sein kann.

Die Kraftübertragungseinrichtung kann Zahnräder umfassen, um eine Kraft durch den Durchgang hindurch übertragen zu können.

Die Kraftübertragungseinrichtung kann eine Welle umfassen, die während des Betriebs mittig innerhalb des Topfes angeordnet sein kann. Die Welle kann an ihrer Unterseite ein Kupplungsmittel umfassen, das mit einem Mixmesser im Topf der Küchenmaschine oder mit einer Welle eines Motors der Küchenmaschine gekuppelt werden kann. Die Welle wird dann Adapter-Welle genannt. Das Kupplungsmittel kann ein oder mehrere Arme aufweisen, die jeweils zwischen Klingen des Mixmessers reichen können, um so eine Drehbewegung des Mixmessers auf die Adapter-Welle übertragen zu können. Die Unterseite der Adapter-Welle kann dann auf dem Mixmesser aufgesetzt sein. Die Arme reichen dann zwischen Klingen.

An der Oberseite der mittig angeordneten Welle kann es ein oder mehrere außermittig angeordnete Wellen der Kraftübertragungseinrichtung geben, die durch die mittig angeordnete Welle angetrieben werden kann. Die mittig angeordnete Welle kann die Adapter-Welle sein. Der Begriff "außermittig angeordnete Welle" umfasst, dass eine Welle zumindest teilweise außermittig während des Betriebs angeordnet ist. Mit Mitte ist eine senkrecht verlaufende Achse gemeint, die durch die Mitte des Bodens des Topfes der Küchenmaschine und/oder durch die Mitte eines Mixmessers der Küchenmaschine verläuft. Eine außermittig angeordnete Welle kann durch den zumindest einen Durchgang während des Betriebs hindurchgeführt sein. Es kann mehr als einen Durchgang geben. Durch jeden Durchgang kann eine außermittig angeordnete Welle hindurchgeführt sein. Es kann so eine Kraft durch den Durchgang hindurch übertragen werden.

Die Kraftübertragungseinrichtung kann eine Zubehör-Anschlusswelle umfassen, die während des Betriebs mittig oberhalb des Topfes angeordnet sein kann. Die Zubehör-Anschlusswelle, die während des Betriebs mittig oberhalb des Topfes angeordnet sein kann, kann durch die ein oder mehreren außermittig angeordnete Wellen angetrieben werden.

Um eine Drehbewegung von einer Welle auf eine andere Welle übertragen zu können, können Außenseiten von ein oder mehreren Wellen als Zahnrad ausgeführt sein. Um eine Drehbewegung von einer Welle auf eine andere Welle übertragen zu können, kann an einer Welle ein Zahnrad befestigt sein.

Die Kraftübertragungseinrichtung kann aus zwei Baueinheiten bestehen oder zwei Baueinheiten umfassen. Eine Baueinheit kann während des Betriebs vollständig oder überwiegend in den Topf der Küchenmaschine eingesetzt sein. Eine Baueinheit kann während des Betriebs an die Unterseite des Deckels angrenzen. Eine Baueinheit kann während des Betriebs in einen Kragen des Deckels eingesetzt sein, der nach unten von dem Deckel absteht. Der Kragen kann in den Topf hineinragen oder in Richtung des Topfbodens gerichtet sein. Der Mittelpunkt des Kragens kann mittig angeordnet sein. Die andere Baueinheit kann während des Betriebs auf den Deckel des Topfes der Küchenmaschine aufgesetzt sein. Durch das Aufsetzen kann die erste Baueinheit mit der zweiten Baueinheit so gekoppelt werden, dass eine Kraft übertragen werden kann.

Anstelle eines Kragens können mehrere Wandungen vorhanden sein, die umlaufend angeordnet sind. Zwischen Wandungen gibt es dann Abstände.

Eine Baueinheit besteht aus mehreren, miteinander verbundenen Teilen. Teile können so miteinander verbunden sein, dass diese nicht zerstörungsfrei voneinander getrennt werden können. Dies kann auch für sämtliche Teile eines Baueinheit gelten.

Teile können lösbar miteinander verbunden sein, beispielsweise um Einzelteile umfassend reinigen zu können. Es können dann lösbare Rastverbindungen oder Schraubverbindungen zwischen Teilen vorhanden sein. Dies kann auch für sämtliche Teile eines Baueinheit gelten.

Der Deckel kann an seiner Oberseite eine umlaufende Wandung umfassen. In die umlaufende Wandung kann in einer Ausgestaltung eine Baueinheit eingesetzt und so während des Betriebs gehalten werden. Anstelle einer Wandung können mehrere Wandungen vorhanden sein, die umlaufend angeordnet sind. Ein Baueinheit kann dann durch eine Mehrzahl von Wandungen während des Betriebs gehalten werden, so zum Beispiel mittig.

Um eine Drehbewegung von einer Welle auf eine andere Welle übertragen zu können, kann ein Riemen vorgesehen sein. Um eine Drehbewegung von einer Welle auf eine andere Welle übertragen zu können, kann ein Abschnitt einer Welle kraftschlüssig an einem Abschnitt einer anderen Welle anliegen. Die Abschnitte können gummiert sein, um Drehbewegungen besonders zuverlässig durch kraftschlüssiges Anliegen übertragen zu können.

Die Kraftübertragungseinrichtung kann eine Kraft mithilfe von magnetischen Kräften übertragen werden. Eine Kraftübertragungseinrichtung kann eine Drehbewegung übertragen, wie dies von Magnetrührern bekannt ist. Ein rotierendes Magnetfeld kann durch einen Magneten erzeugt werden, der durch einen Antrieb der Küchenmaschine angetrieben wird. Das rotierende Magnetfeld kann für ein Übertragen einer Drehbewegung durch den Deckel hindurch genutzt werden. In diesem Fall kann der Deckel vollständig geschlossen sein.

Durch die Kraftübertragungseinrichtung kann insbesondere eine Drehbewegung übertragen werden.

Das Zubehör kann eine Saftpresse sein. Das Element, das außerhalb des Topfes der Küchenmaschine während des Betriebs angeordnet sein kann, kann ein Kegel sein. Durch die Kraftübertragungseinrichtung kann dann der Kegel gedreht werden, um beispielsweise Saft einer Zitrusfrucht erhalten zu können.

Das Zubehör kann ein Gemüseschneider sein. Das Element, das außerhalb des Topfes der Küchenmaschine während des Betriebs angeordnet sein kann, kann eine Schneidscheibe sein. Durch die Kraftübertragungseinrichtung kann dann die Schneidscheibe gedreht werden, um Gemüse beispielsweise in Streifen oder Scheiben schneiden können.

Das Zubehör kann eine Reibe sein. Das Element, das außerhalb des Topfes der Küchenmaschine während des Betriebs angeordnet sein kann, kann eine Reibscheibe sein. Durch die Kraftübertragungseinrichtung kann dann die Reibscheibe gedreht werden, um beispielsweise eine Muskatnuss durch Reiben zerkleinern zu können.

Das Zubehör kann ein Spiralschneider sein, um Gemüse spiralförmig schneiden zu können. Das Element kann dann ein Trichter mit Schneide in der Trichterwand sein. Ein Spiralschneider wird auch Zoodle Maker genannt.

Das Zubehör kann eine Flockenquetsche sein, um beispielsweise Hafer, Dinkel oder Roggen zu quetschen. Das Zubehör kann eine Nudelmaschine sein, um beispielsweise Nudeln aus einem Teig herausschneiden zu können. Das Zubehör kann eine Presse sein, um beispielsweise Obst verpressen oder Nahrungsmittel durch eine Lochscheibe hindurch pressen zu können. Das Element, das außerhalb des Topfes der Küchenmaschine während des Betriebs angeordnet sein kann, kann eine Spirale sein, um pressen zu können.

Das System kann eine Abdeckung für eine Öffnung im Deckel umfassen. Die Abdeckung kann abgenommen sein, wenn eine Kraft von einem Antrieb der Küchenmaschine auf ein Element eines Zubehörs übertragen wird.

Es zeigen:
- Figur 1:: Küchenmaschine;
- Figur 2:: Ansicht einer Abdeckung;
- Figur 3:: System mit Deckel und Abdeckung;
- Figur 4:: Deckel mit aus Zahnrädern gebildeter Kraftübertragungseinrichtung;
- Figur 5:: Deckel mit aus biegsamer Welle gebildeter Kraftübertragungseinrichtung;
- Figur 6:: System mit aus Baueinheiten gebildeter Kraftübertragungseinrichtung;
- Figur 7:: Schnitt durch eine Baueinheit einer Kraftübertragungseinrichtung;
- Figur 8:: Aufsicht auf Unterseite einer Baueinheit;
- Figur 9:: System mit biegsamer Welle.

Nachfolgend werden die Erfindung und vorteilhafte Ausgestaltungen anhand von Figuren verdeutlicht.

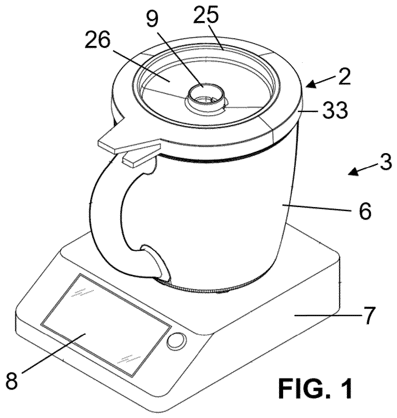

In der Figur 1 wird eine Küchenmaschine 3 gezeigt. Die Küchenmaschine 3 kann einen Topf 6 umfassen. Ein Deckel 2 der Küchenmaschine 3 kann für ein Verschließen des Topfes 6 vorgesehen sein. Die Küchenmaschine 3 kann eine Basis 7 umfassen. Es kann sein, dass der Topf 6 von der Basis 7 gelöst werden kann. Es kann sein, dass der Topf 6 mit der Basis 7 durch eine Verriegelungseinrichtung fest verbunden werden kann. Es kann sein, dass der Deckel 2 mit dem Topf 6 durch eine Verriegelungseinrichtung fest verbunden werden kann. Ist eine Verriegelungseinrichtung vorhanden, dann muss die Verriegelungseinrichtung gelöst werden, bevor der Topf 6 von der Basis 7 abgenommen werden kann und/oder bevor der Deckel 2 von dem Topf 6 abgenommen werden kann. Es kann sein, dass ein Teil einer Verrieglungseinrichtung durch eine Doppelwand des Topfes 6 hindurchführt, um den Deckel 2 verriegeln zu können. Die Doppelwand kann durch einen beispielsweise aus Metall gebildeten Innentopf und eine abnehmbare Hülle gebildet sein. Die Hülle kann aus einem thermisch isolierenden Material bestehen, das Wärme schlechter leitet als ein Metall wie zum Beispiel Kupfer oder Aluminium.

Die Küchenmaschine 3 kann eine elektrische Küchenmaschine sein. Die Küchenmaschine 3 kann eine Heizfunktion haben. Die Küchenmaschine 3 kann dann Lebensmittel erhitzen. Ein Kochen von Lebensmitteln kann durch die Küchenmaschine 3 möglich sein. Die Küchenmaschine 3 kann ein Mischwerkzeug umfassen. Mithilfe des Mischwerkzeugs kann ein Lebensmittel gemischt und/oder zerkleinert werden. Das Mischwerkzeug kann eine Welle umfassen. Von der Mischwerkzeug-Welle können ein oder mehrere Misch- und/oder Schneidwerkzeuge radial abstehen. Das Mischwerkzeug kann ein Mixmesser mit einer Mehrzahl von Klingen sein. Die Klingen können von einer Mischwerkzeug-Welle des Mixmessers abstehen. Das Mischwerkzeug kann beim Boden des Topfes 6 vorhanden sein. Das Mischwerkzeug kann beispielsweise mit einem elektrischen Motor der Küchenmaschine 3 angetrieben werden. Der Motor kann innerhalb der vorgenannten Basis 7 der Küchenmaschine 3 angeordnet sein. Die Küchenmaschine 3 kann eine Waagenfunktion umfassen. Mithilfe der Küchenmaschine 3 ist es dann möglich, Lebensmittel wiegen zu können. Die Küchenmaschine 3 kann ein Display 8 umfassen. Das Display 8 kann ein berührungsempfindliches Display sein. Das Display 8 kann ein Bedienungselement für die Küchenmaschine 3 sein. Über das Display 8 können dann Funktionen der Küchenmaschine 3 eingestellt werden. Es kann sein, dass durch das Display 8 Parameter der Küchenmaschine 3 angezeigt werden können. Ein Parameter kann beispielsweise eine eingestellte Drehzahl für ein Mischwerkzeug sein. Ein Parameter kann beispielsweise eine eingestellte Heiztemperatur sein. Ein Parameter kann eine Temperatur sein, die im Topf herrscht. Ein Parameter kann manuell eingestellt werden oder durch eine Steuerung mithilfe eines elektronisch gespeicherten Rezepts automatisch eingestellt sein oder werden.

Der Deckel 2 der Küchenmaschine 3 kann einen Stutzen 9 aufweisen. Der Stutzen 9 kann von einer Oberfläche des Deckels 2 nach oben abstehen. Der Stutzen 9 kann eine Öffnung bilden, durch die hindurch beispielsweise eine Flüssigkeit in den Topf 6 gegeben werden kann.

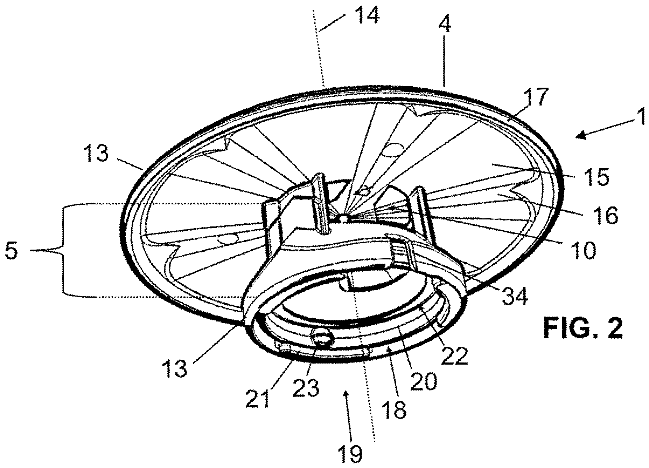

In der Figur 2 wird eine Abdeckung 1 für den in der Figur 1 gezeigten Deckel 2 der Küchenmaschine 3 gezeigt. Die Abdeckung 1 kann mit dem Deckel 2 der Küchenmaschine 3 zusammenwirken. Die Abdeckung 1 kann einen Dachabschnitt 4 umfassen. Der Dachabschnitt 4 kann zum Auffangen von Gargutspritzern und/oder zum Führen von überlaufendem Gargut geeignet sein. Der Dachabschnitt 4 kann die Oberseite der Abdeckung 1 umfassen. Oberhalb des Dachabschnitts 4 endet dann die Abdeckung 1.

Die Abdeckung 1 kann ein Abstandselement 5 umfassen. Es kann sein, dass durch das Abstandselement 5 ein Abstand zwischen dem Deckel 2 der Küchenmaschine 3 und dem Dachabschnitt 4 hergestellt werden kann. Es kann dann ein Abstandsbereich zwischen dem Deckel 2 und dem Dachabschnitt 4 vorhanden sein. Das Abstandselement 5 kann die Unterseite der Abdeckung 1 umfassen. Die Seite der Abdeckung 1, die der Unterseite gegenüberliegt, ist die Oberseite der Abdeckung 1. Der Bereich zwischen Unterseite und Oberseite bildet den seitlichen Bereich der Abdeckung 1.

Die Abdeckung 1 kann so mit dem Stutzen 9 in einer Ausgestaltung zusammenwirken, dass die Abdeckung 1 mit dem Stutzen 9 lösbar verbunden werden kann. Es kann sein, dass eine feste Verbindung zwischen der Abdeckung 1 und dem Stutzen 9 hergestellt werden kann. Die Abdeckung 1 kann sich dann nicht durch Schwerkraft von dem Stutzen 9 lösen. Dies gilt dann unabhängig von der Position des Deckels 2. Die feste Verbindung kann eine formschlüssige Verbindung sein. Die feste Verbindung kann eine Rastverbindung sein. Die feste Verbindung kann eine kraftschlüssige Verbindung sein. Insbesondere kann die feste Verbindung wieder gelöst werden, ohne dafür Werkzeug verwenden zu müssen.

Die Abdeckung 1 kann zumindest eine Auslassöffnung 10 aufweisen. Es können genau zwei Auslassöffnungen 10 vorhanden sein. Die beiden Auslassöffnungen 10 können gegenüberliegend angeordnet sein. Das Abstandselement 5 kann eine Auslassöffnung 10 umfassen. Eine Auslassöffnung 10 kann an den Dachabschnitt 4 angrenzen, also bis zur Unterseite des Dachabschnitts 4 reichen. Die Auslassöffnung 10 kann beim Abstandsbereich vorhanden sein.

Der obere Abschnitt des Abstandselements 5, der eine Auslassöffnung 10 umfasst, kann ein Hals sein. Der untere Abschnitt des Abstandselements 5 unterhalb des Halses kann ein Sockel sein, der immer einen größeren Querschnitt als der maximale Querschnitt des Halses aufweist. Der Sockel kann dem Verbinden mit einem Stutzen sowie einem stabilen Aufstellen der Abdeckung 1 auf einem Untergrund dienen. Der im Vergleich dazu schmale Hals kann dafür Sorge tragen, dass der Dachabschnitt 4 großflächig herausspritzendes Gargut abschirmen kann. Ein jeder Durchmesser des Halses ist also grundsätzlich kleiner als ein jeder Durchmesser des Sockels. Die Unterseite des Sockels kann den größten Durchmesser bzw. den größten Querschnitt aufweisen, um ein stabiles Aufstellen zu ermöglichen.

Die Abdeckung 1 kann mindestens zwei Auslassöffnungen 10, besonders bevorzugt mindestens drei Auslassöffnungen 10 aufweisen. Auslassöffnungen 10 können gleichmäßig verteilt angeordnet sein. Benachbarte Auslassöffnungen 10 weisen dann gleiche Abstände auf.

Der Dachabschnitt 4 kann durch einen Rotationskörper 13 gebildet sein oder einen Rotationskörper 13 umfassen. Der Dachabschnitt 4 kann aus mindestens einem zumindest teilweisen Rotationskörper 13 gebildet sein oder diesen umfassen.

Ein teilweiser Rotationskörper meint, dass der Rotationskörper nicht über einen vollen Umfang ein Rotationskörper ist. Ein Rotationskörper über einen vollen Umfang, welcher auch als vollumfänglicher Rotationskörper bezeichnet werden kann, weist einen Rotationswinkel von 360° auf. Ein zumindest teilweiserer Rotationskörper weist einen Winkel kleiner als 360° auf. Es kann also eine Unterbrechung des vollen Rotationskörpers geben. Es kann sein, dass nicht der volle Rotationskörper benötigt wird oder beispielsweise Funktionselemente wie Aussparungen oder Hervorstehenden in den vollen Rotationskörper eingearbeitet sind, sodass sich nur noch ein zumindest teilweiser Rotationskörper ergibt. Ferner kann es sein, dass mehrere teilweise Rotationskörper 13 und/oder vollständige Rotationskörper 13 vorhanden sind. Das kann bedeuten, dass es mindestens einen zumindest teilweisen Rotationskörper geben kann.

Die äußere Form des Dachabschnittes 4 mit Sicht auf die Oberseite des Dachabschnittes kann rund, kreisrund, eckig oder oval sein oder weist eine andere Freiform auf.

Der Dachabschnitt 4 kann auf seiner Unterseite eine Führungskontur 15 für überlaufendes Gargut umfassen, insbesondere zum Führen von überlaufenden Gargut von radial innen nach radial außen

Die Führungskontur 15 kann Rinnen 16 und/oder andere Führungskörper aufweisen.

Die Führungskontur 15 kann so ausgestaltet sein, dass überlaufendes Gargut von einer Mitte, vorzugsweise strahlenförmig, radial nach außen geführt werden kann. Dafür kann eine Rinne 16 vorgesehen sein, die von innen radial nach außen verläuft.

Die Führungskontur 15 kann sich von einer Mitte radial nach außen aufweiten.

Die mindestens eine Auslassöffnung 10 kann vollständig oder zumindest teilweise vom Dachabschnitt 4 überkragt werden.

Die mindestens eine Auslassöffnung 10 kann zumindest teilweise vom Dachabschnitt 4 in eine zumindest radiale Richtung überkragt werden.

Die mindestens eine Auslassöffnung 10 kann zumindest teilweise vom Dachabschnitt 4 in zumindest eine Richtung einer Flächennormalen der Auslassöffnung 10 überkragt werden.

Der Dachabschnitt 4 kann so ausgestaltet sein, dass Gargutspritzer, die in freier Flugbahn durch die Auslassöffnung 10 von innen nach außen fliegen, durch die Unterseite des Dachabschnittes 4 abgefangen und/oder umgelenkt werden.

Freie Flugbahn meint hier, dass Gargutspritzer von einer gewünschten Hauptströmungsrichtung abweichen. Eine gewünschte Hauptströmungsrichtung kann insbesondere die Strömungsrichtung von Dampf darstellen, wobei der Dampf seinen Weg aus dem Topfinneren in die Atmosphäre nimmt, sobald die Küchenmaschine 3 im Betrieb ist, insbesondere im Heizbetrieb ist, oder sich heißes dampfendes Gargut im Topfinneren befindet. Die freie Flugbahn der Gargutspritzer weicht somit von einer gewünschten Hauptströmungsrichtung ab. Das Entstehen von Gargutspritzern kann in einem Betrieb der Küchenmaschine entstehen. Der Betrieb kann eine Mixfunktion umfassen. Der Betrieb kann eine Heizfunktion umfassen. Der Betrieb kann kombinativ eine Heizfunktion und eine Mixfunktion umfassen.

Der minimale Durchmesser des Dachabschnitts 4 kann in Aufsicht gesehen wenigstes 1,5 mal größer als der maximale Durchmesser des genannten Abstandselements 5 sein.

Der Dachabschnitt 4 kann in mindestens einer Seitenansicht mit Sicht auf die Auslassöffnungen 10 gesehen die ein oder mehreren Auslassöffnungen 10 zumindest teilweise verdecken. Der Dachabschnitt 4 kann wie eine Kappe geformt sein. Ein Randbereich 17 kann eine Auslassöffnung zumindest teilweise nach außen abdecken. Der Dachabschnitt 4 kann zumindest zum Rand hin gewölbt sein. In seitlicher Aufsicht gesehen kann der Randbereich 17 wenigstens 10% oder wenigstens 20% der Auslassöffnung abdecken. 10% bzw. 20% der Auslassöffnung sind dann bei einer seitlichen Aufsicht nicht sichtbar.

Der Abstandsbereich kann einen Kupplungsbereich 18 umfassen, insbesondere zum zumindest kraftschlüssigen und/oder formschlüssigen Zusammenwirken mit dem Deckel 2 einer Haushaltsküchenmaschine 3, insbesondere zum Zusammenwirken mit einem Stutzen 9 des Deckels 2, oder insbesondere zum Zusammenwirken mit einer Innen- oder Außenkontur des Deckels 2 einer Haushaltsküchenmaschine. Der Kupplungsbereich 18 kann in das Abstandselement 5 integriert sein.

Der Kupplungsbereich 18 kann unterhalb des Abstandsbereichs angeordnet sein und/oder in den Abstandsbereich integriert sein.

Das Abstandselement 5 kann sich nach unten hin verbreitern. Dies kann von Vorteil sein, um die Abdeckung 1 mit einem Stutzen 9 eines Deckels 2 verbinden zu können. Das Abstandselement 5 kann einen Hals umfassen, der einen kleineren Durchmesser aufweist als der Bereich unterhalb des Halses. Der Hals kann die mindestens eine Auslassöffnung 10 aufweisen. Dies kann von Vorteil sein, damit durch einen Dachabschnitt 4 viel Fläche für eine Führung von Dampf und dergleichen zur Verfügung steht. Der Bereich unterhalb des Halses kann den Kupplungsbereich 18 umfassen.

Der Hals kann zylinderartig geformt sein. Es kann sein, dass sich der Querschnitt des Halses entlang seiner Erstreckung von unten nach oben nicht verändert. An die Unterseite des Halses kann sich ein Sockel mit größerem Querschnitt anschließen. Diese Form eines Sockels kann günstig sein, um den Sockel mit einem Stutzen 9 verbinden zu können. An den Hals kann sich ein Konus oder ein Trichter anschließen, um einen im Vergleich zum Querschnitt des Halses vergrößerten Querschnitt zu erhalten. Der Konus bzw. der Trichter kann in eine zylinderartige Form einmünden.

Eine Auslassöffnung 10 kann bis zum oberen Ende eines Sockels reichen. Eine Auslassöffnung 10 kann sich über die gesamte Länge des Halses erstrecken, um die Bauhöhe der Abdeckung 1 geringhalten zu können, wie dies beispielsweise in der Figur 2 zu erkennen ist.

Der Kupplungsbereich 18 kann umlaufend sein. Der Kupplungsbereich 18 kann an eine Einlassöffnung 19 angrenzen, die sich an der Unterseite der Abdeckung 1 befindet. Die Einlassöffnung 19 kann eine mittige Öffnung der Abdeckung 1 sein. Die Einlassöffnung 19 kann von dem Kupplungsbereich 18 eingeschlossen sein. Der Kupplungsbereich 18 kann zur Führung von Dampf zwischen der Einlassöffnung 19 und der Auslassöffnung 10 beitragen. Es kann so ein Strömungsweg für Dampf vorhanden sein.

Der Kupplungsbereich 18 kann in mindestens einem Bereich aus einem zumindest teilweisem Rotationskörper gebildet sein oder umfassen.

Der Kupplungsbereich 18 und/oder das Abstandselement 5 und/oder der Dachabschnitt 4 können mindestens eine Spannvorrichtung umfassen. Die Spannvorrichtung kann ein Spannring 20 sein. Durch die Spannvorrichtung kann die Abdeckung 1 mit dem Deckel 2 einer Küchenmaschine so verspannt werden, dass die Abdeckung 1 mit dem Deckel 2 verbunden werden kann. Durch die Spannvorrichtung 1 kann die Abdeckung 1 beispielsweise kraftschlüssig an einem Stutzen 9 des Deckels 2 gehalten sein.

Der Spannring 20 kann kreisrund sein, um einen Stutzen 9 mit kreisrundem Querschnitt in den Spannring möglichst einfach hineinstecken zu können.

Der Kupplungsbereich 18 kann mindestens eine Durchbrechung 34 aufweisen, um den Kupplungsbereich 18 flexibel zu halten. Die Durchbrechung 34 kann bei der Abdeckung seitlich vorhanden sein. Die Durchbrechung 34 kann an die Unterseite der Abdeckung 1 angrenzen. Die Durchbrechung 34 kann mit der Einlassöffnung 19 verbunden sein. Es gibt dann keine trennende Wand oder einen trennenden Steg zwischen der Einlassöffnung 19 und der Durchbrechung 34.

Die Spannvorrichtung, also zum Beispiel ein Spannring 20, kann intergiert und/oder entnehmbar sein. Die Spannvorrichtung kann als 2-Komponenten-Bauteil integriert sein. Dies meint, dass es eine stoffschlüssige Verbindung zwischen Spannvorrichtung und Abdeckung 1 gibt.

Der Kupplungsbereich 18 kann eine Halterung für ein Halten der Spannvorrichtung umfassen. Die Halterung kann Aussparung sein. Aus der Halterung kann die Spannvorrichtung in einer Ausgestaltung herausgenommen werden. Die Halterung kann wie eine Rille geformt sein. Die Halterung kann umlaufend sein. Die Halterung kann eine umlaufende Vertiefung sein. Die Halterung kann Haltelemente 21 umfassen. Die Haltelemente 21 können nach innen abstehen. Seitlich kann die Spannvorrichtung an den Haltelementen 21 anliegen. Ein Halteelement 21 kann so zum Halten der Spannvorrichtung beitragen. Ein Halteelement 21 kann sich bei der Einlassöffnung 19 befinden oder Teil des Rands der Einlassöffnung 19 sein. Ein Halteelement 21 kann bogenförmig sein.

Ein umlaufende Stufe 22 kann Teil der Halterung für ein Halten der Spannvorrichtung sein. Die Spannvorrichtung kann mit einer Seite an die umlaufende Stufe 22 angrenzen. Die Spannvorrichtung kann an einer Seite durch Halteelemente 21 und an der anderen Seite durch die die umlaufende Stufe 22 gehalten sein. Das Vorsehen von mehreren Halteelementen 21 bei der Einlassöffnung, die untereinander Abstände aufweisen, kann eine Entnahme und Austauschmöglichkeit der Spannvorrichtung erleichtern.

Die Spannvorrichtung kann mindestens ein Spannelement umfassen, vorzugsweise mindestens 3 Spannelemente umfassen, oder vorzugsweise mindestens 6 Spannelemente umfassen, oder vorzugsweise 8 oder 12 Spannelemente umfassen. Ein Spannelement kann ein Noppen 23 sein. Ein Noppen 23 kann nach innen von einem Spannring 20 abstehen.

Die Innenseite des Spannrings 20 kann wellenförmig verlaufen, um so einen Spannring 20 mit nach innen gerichteten Spannelementen zu schaffen. Die Außenseite des Spannrings 20 kann kreisrund sein. Zusätzlich kann die Breite der nach innen gerichteten Spannelemente nach innen hin kleiner werden.

Die Spannvorrichtung kann aus einem flexiblen und/oder federnden Material gefertigt sein. Das Material kann Silikon und/oder Kautschuk umfassen und/oder ein Elastomer umfassen. Die Spannvorrichtung kann aus einem Kunststoff gefertigt sein.

Die Spannvorrichtung kann eine Vorspannkraft zum Befestigen der Abdeckung 1 am Deckel für eine Haushaltsküchenmaschine bewirken, wobei das Abdeckung 1 durch Überwinden der Vorspannkraft abziehbar ist. Die erforderliche Abzugskraft zum Überwinden der Vorspannkraft kann mindestens 2 N betragen, besonders bevorzugt mindestens 4 N betragen, ganz besonders bevorzugt mindestens 7 N betragen, oder insbesondere 2-12 N betragen. Die Obergrenze für die Abzugskraft kann 16 N oder 14 N oder 12 N oder 10 N betragen.

Eine längste radiale Ausdehnung des Dachabschnittes 4, also eine Ausdehnung in Aufsicht auf den Dachabschnitt 4 gesehen, kann 1,25 bis 3 mal so groß wie eine längste radiale Ausdehnung des Kupplungsbereiches sein.

Das Material der Abdeckung 1 kann einen Kunststoff umfassen, insbesondere einen thermoplastischen Kunststoff oder insbesondere Polypropylenkunststoff oder insbesondere einen Polyesterkunststoff oder insbesondere einen Polyethylenterephthalatkunststoff oder insbesondere einen Polyamidkunststoff.

Die Erfindung betrifft auch ein System mit einer Abdeckung 1. Das System kann einen Deckel 2 umfassen. Der Deckel 2 kann einen Kragen 9 umfassen. Der Kragen 9 kann zentral angeordnet sein.

Der Deckel 2 kann mindestens eine Öffnung für Dampf umfassen. Beispielsweise Dampf kann dann den Deckel 2 durch die Öffnung hindurch passieren. Der Kragen 9 kann eine Öffnung für Dampf bilden oder Teil einer Öffnung sein, durch die hindurch der Deckel 2 passiert werden kann. Dann kann beispielsweise Dampf den Deckel 2 passieren. Durch die Öffnung hindurch kann eine Dampfverbindung zwischen einem Topfinneren und Topfäußeren hergestellt werden. Die Öffnung wird daher nachfolgend auch Dampföffnung genannt.

Der Kragen 9 kann die Dampföffnung bilden, damit Dampf den Deckel 2 passieren kann.

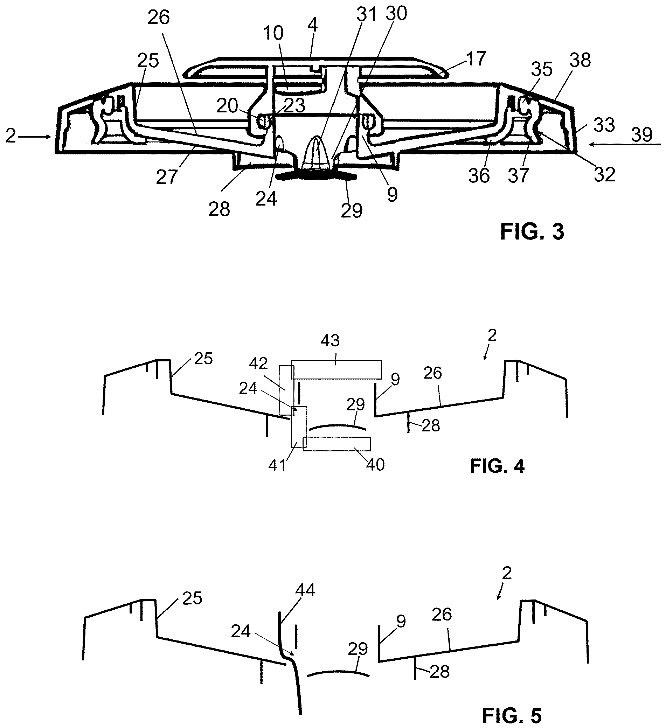

Der Deckel 2 kann eine in der Figur 3 gezeigte Emulsionsöffnung 24 aufweisen. Der Deckel 2 kann genau eine oder genau zwei oder genau drei Emulsionsöffnungen 24 aufweisen. Eine Emulsionsöffnung 24 kann im Mantel des Kragens 9 vorgesehen sein. Wird eine Flüssigkeit auf die Oberseite des Deckels gegossen, dann kann die Flüssigkeit durch eine Emulsionsöffnung 24 hindurch in einen Topf 6 fließen, der durch den Deckel 2 abgedeckt wird. Eine Emulsionsöffnung 24 kann angrenzend an die Oberseite des Deckels 2 vorgesehen sein. Eine Flüssigkeit kann dann sofort eine Emulsionsöffnung 24 passieren und kann also nicht durch den Kragen 9 zuerst gestaut werden.

Es ist unschädlich, wenn durch eine Emulsionsöffnung 24 während eines Betriebs auch Dampf oder überlaufendes Gargut austritt. Dies gilt vor allem dann, wenn eine Emulsionsöffnung 24 im Stutzen 9 vorhanden und damit nicht nach oben geöffnet ist.

Der Querschnitt und damit die Durchtrittfläche der Dampföffnung sind grundsätzlich größer als der Querschnitt der Emulsionsöffnung 24. Der kleinste Querschnitt und damit die kleinste Durchtrittfläche der Dampföffnung sind grundsätzlich größer als der größte Querschnitt der Emulsionsöffnung 24.

Die Oberseite 26 des Deckels 2 kann zumindest angrenzend an den Kragen 9 in Richtung des Kragens 9 nach unten geneigt sein. Flüssigkeit kann aufgrund der Neigung in Richtung des Kragens fließen und damit auch in Richtung von ein oder mehreren Emulsionsöffnungen 24.

Von der Deckeloberseite 26 kann eine umlaufende Seitenwand 25 nach oben abstehen. Die Seitenwand 25 kann ein Deckelinnenrand sein. Der Durchmesser der umlaufenden Seitenwand 25 kann wenigstens doppelt so groß oder wenigstens dreimal so groß wie der Durchmesser des Kragens 9 sein. Von der Seitenwand 25 ausgehend kann sich die Deckeloberseite 26 trichterförmig in Richtung Kragen 9 neigen. Durch die Trichterform kann Flüssigkeit von der Seitenwand 25 bis zum Kragen 9 fließen. Ein vollständiges Abfließen von Flüssigkeit durch Emulsionsöffnungen 24 hindurch kann erreicht werden. Durch das Vorsehen der Seitenwand 25 kann sichergestellt werden, dass Flüssigkeit nicht nach außen abfließt.

Von der Unterseite 27 des Deckels 2 kann ein Kragen 28 nach unten abstehen. Der Kragen 28 kann ein umlaufender Kragen sein. Der Durchmesser des nach unten abstehenden Kragens 28 kann größer als der Durchmesser des nach oben abstehenden Kragens 9 sein. Der Durchmesser des nach unten abstehenden Kragens 28 kann kleiner als der Durchmesser der umlaufenden Seitenwand 25 sein. Der nach unten abstehende Kragen 28 kann einen Durchmesser aufweisen, der maximal zweimal so groß ist wie der Durchmesser des nach oben abstehenden Kragens 9. Der nach unten abstehende Kragen 28 kann dazu beitragen, ein unerwünschtes Herausspritzen von Gargut zu vermeiden.

Unterhalb des nach oben abstehenden Kragens 9 kann ein Abdeckelement 29 des Deckels 2 vorhanden sein. Das Abdeckelement 29 kann die Öffnung bzw. Dampföffnung, die durch den nach oben abstehenden Kragen 9 bereitgestellt sein kann, zumindest teilweise verdecken, und zwar in Aufsicht auf die Unterseite 27 des Deckels 2 gesehen. Das Abdeckelement 29 kann die Öffnung zumindest überwiegend abdecken. Das Abdeckelement 29 kann in Aufsicht auf die Unterseite 27 des Deckels 2 gesehen die Öffnung vollständig abdecken. Durch das Abdeckelement 29 kann verbessert ein unerwünschtes Herausspritzen von Gargut vermieden werden.

Das Abdeckelement 29 kann mithilfe eines Stegs 30 befestigt sein. Der Steg 30 kann eine nach unten abstehende Verlängerung des nach oben abstehenden Kragens 9 sein. Es kann mehr als ein Steg 30 vorhanden sein. Stege 30 können untereinander Abstände aufweisen, durch die hindurch eine Flüssigkeit fließen kann. Das Abdeckelement 29 kann ein Fuß sein, mit dem die Abdeckung 1 auf einem Untergrund abgestellt werden kann.

Stege 30 können unterschiedlich lang sein, sodass eine Vorzugsrichtung für Dampf und/oder einfließendes Gargut eingestellt werden kann. Dadurch kann das Abdeckelement 29 schief angeordnet sein, und zwar im Vergleich zu der in der Figur 3 gezeigten Anordnung. Das Abdeckelement 29 kann auch auf andere technische Weise schief angeordnet sein, um eine Vorzugsrichtung für Dampf und/oder einfließendes Gargut zu erzeugen.

Das Abdeckelement 29 kann nach unten zum Rand hin gewölbt oder anders geneigt sein, damit Flüssigkeit zum Rand der Abdeckelement 29 abfließen kann. Flüssigkeit kann dann vollständig von dem Abdeckelement 29 abfließen.

Das Abdeckelement 29 kann aus Stabilitätsgründen mithilfe einer Verstärkung 31 befestigt sein. Die Verstärkung 31 kann wie ein Wulst geformt sein. Der Wulst kann einen näherungsweise dreieckigen Querschnitt aufweisen. Der Wulst kann mit einer Seite auf der Oberseite des Abdeckelements 29 vorhanden sein. Der Wulst kann mit einer Seite auf der Innenseite eines Stegs 30 vorhanden sein.

Der Deckel 2 kann eine umlaufende Dichtung 32 umfassen. Die Dichtung 32 kann geklemmt gehalten sein. Die Dichtung 32 kann aus einem biegsamen Material bestehen. Das Material der Dichtung 32 ist dann biegsamer als das übrige Material, aus dem der Deckel 2 hergestellt ist. Die Dichtung 32 kann nach unten von dem Deckel 2 abstehen. Die Dichtung 32 kann ein Ring sein. Die Dichtung 32 kann sich beim äußeren Rand 33 des Deckels 2 befinden. Die Dichtung 32 kann einen Abstand zum äußeren Rand 33 aufweisen. Der Querschnitt der Dichtung 32 kann näherungsweise wie ein umgekehrtes L geformt sein, wie dies in der Figur 3 zu erkennen ist. Der kurze Schenkel 35 der L-Form kann klemmend und/ oder formschlüssig gehalten sein, so zum Beispiel mithilfe eines Befestigungselements 36, das an der Unterseite beispielsweise durch Kleben oder Verschweißen befestigt sein kann. Der lange Schenkel 37 der L-Form kann bogenförmig sein. Das untere freie Ende des langen Schenkels kann nach unten zur Außenseite hin geneigt sein, wie dies in der Figur 3 zu sehen ist.

Der Rand 33 des Deckels 2 kann nach unten abstehen. Ein Abschnitt 38 des Deckels 2, der an den Rand 33 angrenzen kann, kann nach außen geneigt verlaufen, wie dies in der Figur 3 zu erkennen ist. Der Abschnitt 38 kann sich bis zur Seitenwand 25 erstrecken. Die Neigung kann kleiner sein als die Neigung des Rands 33, wie dies in der Figur 3 zu sehen ist. Der Winkel, den der Abschnitt 38 mit dem Rand 33 einschließt, kann größer als 90° sein. Der Winkel, den der Abschnitt 38 mit dem Rand 33 einschließt, kann kleiner als 130° sein. Die Dichtung 32 kann durch den Rand 33 in seitlicher Aufsicht verdeckt sein. In der Figur 3 wird die seitliche Ansicht durch einen Pfeil 39 verdeutlicht. Die Abdeckung 1 kann wie ein Gefäß geformt sein. Ist die Abdeckung 1 dann aufgesetzt, kann es eine mindestens eine Öffnung geben, durch die hindurch Dampf aus einem Topf 3 in das Gefäß geleitet kann. Die Abdeckung 1 kann dann ein Dampfgargefäß sein. Das Dampfgargefäß kann einen Deckel und/oder einen Zwischenboden oberhalb eines Bodens des Dampfgargefäßes aufweisen. Der Zwischenboden kann gelocht sein. Der Zwischenboden kann herausnehmbar sein. Umgekehrt kann der Zwischenboden bei Bedarf in das Dampfgargefäß eingesetzt werden.

Das Dampfgargefäß kann ein Dampfentsafter sein, also ein Auffanggefäß für heruntertropfenden Saft. Der Saft kann in den Topfinnenraum zurückgeleitet werden und/oder nach außen abgeführt werden.

Die Dampföffnung und die ein oder mehreren Emulsionsöffnungen 24 können überlappen und/oder ineinander übergehen.

Beim System kann der Stutzen 9 des Deckels 2 einer Haushaltsküchenmaschine 3 nicht vollständig durch die Abdeckung 1 überstülpt sein, wenn die Abdeckung 1 mit dem Stutzen 9 verbunden ist. Ist die Abdeckung 1 mit dem Stutzen 9 verbunden, dann gibt es einen Abstand zwischen der Oberseite 26 des Deckels 2 und der Unterseite der Abdeckung 1, wie dies in der Figur 3 zu erkennen ist. Zwischen dem Stutzen 9 und der Abdeckung 1 kann es dann eine dichte Verbindung geben. Es muss allerdings keine dichte Verbindung geben.

Ein oder mehrere Emulsionsöffnungen 24 am Stutzen 9 können zumindest teilweise freibleiben, bevorzugt vollständig freibleiben, wenn die Abdeckung 1 mit dem Stutzen 9 verbunden ist.

Beim System kann die Unterseite des Dachabschnitts 4, bevorzugt der tiefliegendste Punkt des Dachabschnitts 4, zumindest gleich oder höherliegend angeordnet sein als die Oberseite 26 des Deckels 2 und/oder höher angeordnet als die Seitenwand 25. Beim System kann die Unterseite des Dachabschnitts 4, bevorzugt der tiefliegendste Punkt des Dachabschnitts 4, zumindest gleich oder höherliegend angeordnet sein als höchstliegenden Punkt des Deckels 2.

Beim System kann der maximale Durchmesser des Dachabschnitts 4 kleiner sein als der Durchmesser einer Seitenwand 25 des Deckels 2, um eine Flüssigkeit auf die Oberseite 26 des Deckels 2 gießen zu können, die von der Seitenwand 25 umlaufen sein kann. Der Dachabschnitt 4 kann zumindest teilweise die Seitenwand des Deckels 2 nicht überkragen.

Die zumindest eine Auslassöffnung 10 kann sich beim System zumindest teilweise oberhalb der Seitenwand 25 befinden (siehe Figur 3), wenn Dampf besonders ungestört entweichen kann. Dies gilt für den Fall, dass die Abdeckung 1 mit dem Deckel 2 verbunden ist.

Die zumindest eine Auslassöffnung 10 kann sich beim System vollständig unterhalb der Seitenwand 25 befinden, wenn Dampf gegen Seitenwand 25 geleitet werden soll, beispielsweise um eine Kondensation und eine Rückführung von Flüssigkeit zu bewirken. Dies gilt für den Fall, dass die Abdeckung 1 mit dem Deckel 2 verbunden ist.

Die Abdeckung 1 und der Deckel 2 können so eingerichtet sein, dass zunächst die Abdeckung 1 auf eine horizontale, ebene Arbeitsfläche abgestellt werden kann. Auf die Abdeckung 1 kann dann der Deckel 2 so abgelegt werden, dass dieser einen Abstand zur Arbeitsfläche aufweist. Auf den Dachabschnitt 4 kann dann der Deckel 2 so abgelegt werden, dass dieser einen Abstand zur Arbeitsfläche aufweist. Damit dies besonders zuverlässig möglich ist, kann der Dachabschnitt 4 eine ebene, dann horizontal verlaufende Fläche auf seiner Oberseite aufweisen, die also nicht gewölbt ist. Der Deckel 2 kann dann besonders leicht ergriffen werden. Außerdem kann vermieden werden, dass die Arbeitsfläche durch den Deckel 2 dann verschmutzt werden kann. Alternativ kann der Dachabschnitt vier bzw. seine Oberseite wie eine Mulde geformt sein. Der Deckel 2 kann dann auf dem Rand der Mulde sicher abgelegt werden. Ungeeignet für ein Ablegen kann eine Wölbung entgegengesetzt zu einer Form einer Mulde sein. Es ist allerding auch möglich, dass ein nach unten abstehender Kragen 28 auf den Dachabschnitt 4 abgestellt werden kann. In diesem Fall kann der Dachabschnitt 4 bzw. seine Oberseite nach oben gewölbt sein, also entgegengesetzt zu einer Muldenform.

Die Oberfläche des Dachabschnitts 4 kann so sein, dass zumindest eine Zutat oder ein weiteres Zubehörteil für einen Kochprozess auf dem des Dachabschnitt 4 der Abdeckung 1 ablegbar ist. Auch aus diesem Grund kann der Dachabschnitt 4 an seiner Oberseite eine ebene Fläche oder eine Mulde aufweisen.

In der Figur 4 wird ein Schnitt durch einen Deckel 2 mit einem mittig angeordneten Stutzen 9 gezeigt. Außerdem wird skizziert, wie mithilfe von Zahnrädern 40, 41, 42 und 43 eine Kraftübertragung durch den Deckel 2 hindurch möglich ist. Das Zahnrad 40 einer Kraftübertragungseinrichtung kann mittig unterhalb der Stutzens 9 des Deckels 2 angeordnet werden. Die Kraftübertragungseinrichtung kann ein zweites Zahnrad 41 umfassen, welches seitlich vom ersten Zahnrad 40 und damit während des Betriebs außermittig angeordnet sein kann. Das zweite Zahnrad 41 kann nach oben gegenüber dem ersten Zahnrad 40 vorstehen und in eine Emulsionsöffnung 24 des Deckels 2 hineinreichen.

Die Kraftübertragungseinrichtung kann weitere Zahnräder 42 und 43 umfassen. Das Zahnrad 43 kann mittig oberhalb des Stutzens 9 angeordnet werden. Seitlich an das Zahnrad 43 angrenzend kann das zweite Zahnrad 42 angeordnet sein. Dieses ist dann während eines Betriebs außermittig angeordnet. Das Zahnrad 42 kann nach unten gegenüber dem Zahnrad 43 vorstehen und bis zur Emulsionsöffnung 24 reichen. Sind die Zahnräder 41 bis 43 wie in der Figur 4 gezeigt während eines Betriebs angeordnet, dann kann das außermittig angeordnete Zahnrad 41 in das außermittig angeordnete Zahnrad 42 eingreifen. Wird das mittig angeordnete Zahnrad 40 der ersten Baueinheit durch einen Antrieb einer Küchenmaschine 3 gedreht, so wird die Drehbewegung mithilfe der Zahnräder 41, 42 auf das Zahnrad 43 übertragen. Die Zahnräder 40, 41 können Teil einer ersten Baueinheit sein. Die Zahnräder 42, 43 können Teil einer zweiten Baueinheit sein. Für eine Kraftübertragung kann das oberhalb des Deckels 2 gezeigt, mittig angeordnete Zahnrad 43 entfallen.

In einer Ausführung haben die kleinen Zahnräder 18 Zähne und das große Zahnrad 54 Zähne. Die Zähne haben dabei eine Länge von ca. 0.65 mm. Es kann eine Überlappung von ca 1,3 mm geben.

Vorzugsweise können die Zahnräder aus Metall sein. Andere Materialien, insbesondere Kunststoffe, können verwendet werden, die besonders verschleißfest sind wie z.B. Polyamid (PA) oder Polyoxymethylen (POM) oder Polyethylenterephthalat (PET / PETP ).

Für eine höhere Kraftübertragung ist eine doppelte Ausführung zwei Zahnräder-Sätzen 41, 42 zu bevorzugen. Die Zahnräder 41, 42, die außermittig angeordnet sind, können beispielsweise 10 bis 26 Zähne ausweisen, so zum Beispiel 18. Die Zahnräder 40, 43, die mittig angeordnet sind, können beispielsweise 46 bis 64 Zähne ausweisen, so zum Beispiel 54. Zähne können eine Länge von wenigstens 0.3 mm haben. Eine Überlappung von außermittig angeordneten Zahnrädern 41, 42 kann wenigstens 1 mm betragen.

Zur Kraftübertragung kann ein planetenartiges Getriebe vorgesehen sein. Es können Kegelzahnräder eingesetzt sein. Unterhalb des nach oben abstehenden Kragens 9 kann ein Abdeckelement 29 des Deckels 2 vorhanden sein.

Ein Gehäuse der ersten Baueinheit kann so dimensioniert sein, dass dieses von dem nach unten abstehenden Kragen 28 und damit von einer umlaufenden Wandung zumindest teilweise gegen ein seitliches Verrutschen gesichert und so gehalten werden kann. Ein Gehäuse der zweiten Baueinheit kann so dimensioniert sein, dass dieses von der nach oben abstehenden Seitenwandung 25 und damit von einer umlaufenden Wandung zumindest teilweise gegen ein seitliches Verrutschen gesichert und so gehalten werden kann.

In der Figur 5 wird eine flexible bzw. biegsame Welle 44 einer Kraftübertragungseinrichtung zusammen mit einem Schnitt durch den Deckel 2 (siehe Figur 4) skizziert. Auch mithilfe einer flexiblen Welle 44 kann eine Drehbewegung von einem Antrieb der Küchenmaschine 3 an ein Element eines Zubehörs übertragen werden, das sich außerhalb des Topfes 6 einer Küchenmaschine 3 während des Betriebs befinden kann.

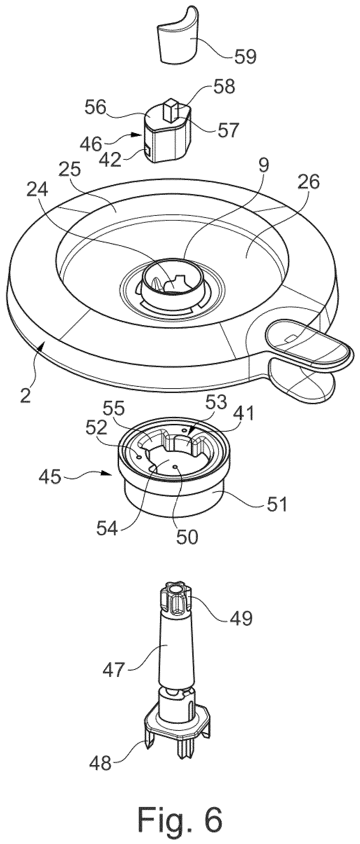

In der Figur 6 wird eine Ausführungsform einer Kraftübertragungseinrichtung gezeigt, mit der eine Drehbewegung durch den Deckel 2 hindurch übertragen werden kann. Die Kraftübertragungseinrichtung kann zwei Baueinheiten 45 und 46 und eine Adapter-Welle 47 umfassen. Die Adapter-Welle 47 kann am unteren Ende nach unten abstehende Arme 48 umfassen, die zwischen Klingen eines Mixmessers einer Küchenmaschine 3 während eines Betriebs reichen können. Das untere Ende der Adapter-Welle 47 kann auf dem Mixmesser oder einem anderen Werkzeug während des Betriebs aufsitzen. Das obere Ende der Adapter-Welle 47 kann einen nicht kreisrunden Kupplungsabschnitt 49 umfassen, der in einen damit korrespondierenden Kupplungsabschnitt an der Unterseite der ersten Baueinheit 45 eingreifen kann. Der Kupplungsabschnitt 49 kann im Schnitt beispielsweise sternförmig oder vieleckig sein. Über die Adapter-Welle 47 kann die Drehbewegung an die erste Baueinheit 45 übertragen werden.

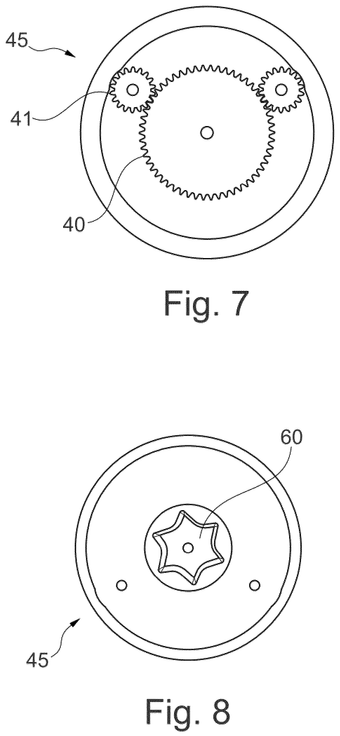

Die erste Baueinheit kann ein mittig angeordnetes Zahnrad 40 umfassen, wie dieses in der Figur 4 gezeigt wird. Das Zahnrad 40 kann mithilfe einer Welle oder Achse 50 drehbar gelagert sein. Die Unterseite des Zahnrads 40 kann den korrespondierenden Kupplungsabschnitt umfassen oder mit einem korrespondierenden Kupplungsabschnitt 60 (siehe Figur 8) fest verbunden sein. Die Welle oder Achse 50 kann durch ein Gehäuse 51 der ersten Baueinheit gehalten sein. Der Außendurchmesser des Gehäuses 51 kann dem Innendurchmesser des nach unten abstehenden Kragens 28 des Deckels 2 so entsprechen, dass das Gehäuse 51 mit geringem Spiel vom Kragen während des Betriebs umringt und so gegen ein seitliches Verschieben gesichert werden kann.

Es können beispielsweise zwei Zahnräder 41 bei der ersten Baueinheit vorhanden sein, die durch Achsen oder Wellen 52 drehbar gelagert werden. Die Achsen oder Wellen 52 können wiederum durch das Gehäuse 51 gehalten sein. Die ein oder mehreren Zahnräder 41 können durch Fenster 53 im Gehäuse erreichbar sein. Die Fenster 53 können beim seitlichen Innenrand einer Ausnehmung 54 der ersten Baueinheit 45 vorhanden sein.

Die Innenwand kann Einbuchtungen 55 umfassen, die beispielsweise die erste Baueinheit 45 ausrichten, wenn diese montiert wird. An der Unterseite des Deckels 2 können damit korrespondierende Ausbuchtungen vorhanden sein, um ein Ausrichten zu ermöglichen.

Die zweite Baueinheit 46 kann seitlich ein oder mehrere Zahnräder 42 aufweisen, wie diese in der Figur 4 gezeigt werden. Die ein oder mehreren Zahnräder 42 können an die Unterseite der zweiten Baueinheit 42 angrenzen. Innerhalb des Gehäuses 56 der zweiten Baueinheit 46 kann ein Zahnrad 43 angeordnet sein, so wie dieses in der Figur 4 gezeigt wird. Das Zahnrad 43 kann mit einer Zubehör-Anschlusswelle 57 verbunden sein. Die Zubehör-Anschlusswelle 57 kann nach oben aus dem Gehäuse 56 herausführen. Die Zubehör-Anschlusswelle 57 kann einen kreisrunden Querschnitt aufweisen, um die Zubehör-Anschlusswelle 57 und damit auch das Zahnrad 43 unproblematisch drehbar lagern zu können. An ihrer Oberseite kann die Zubehör-Anschlusswelle 57 einen davon abweichenden Querschnitt 58 aufweisen. Ein Drehmoment kann auf ein Element eines Zubehörs durch eine formschlüssige Verbindung übertragen werden.

Das Gehäuse 56 der zweiten Baueinheit 46 kann einen kreisrunden Querschnitt oder einen teilkreisrunden Querschnitt aufweisen. Der Radius des Gehäusequerschnitts kann etwas geringer als der Innendurchmesser des Stutzens 9 sein, damit die zweite Baueinheit 46 durch den Stutzen 9 gehalten werden kann.

Ist der Querschnitt des Gehäuses 56 im Querschnitt ähnlich wie ein Teilkreis geformt, so kann ein ausgerichtetes Einsetzen erleichtert werden. Um die Lage zu stabilisieren, kann ein Zusatzgehäuse 59 vorgesehen sein, welches in den verbleibenden Zwischenraum innerhalb des Stutzens 9 zusätzlich zur zweiten Baueinheit 46 eingesetzt werden kann. Das Zusatzgehäuse 59 kann so gestaltet und dimensioniert sein, dass durch Einsetzen des Zusatzgehäuse 59 in den Stutzen 9 die zweite Baueinheit 46 klemmend gehalten sein kann. Das Zusatzgehäuse 59 kann aus einer umlaufenden Wand mit einem Hohlraum gebildet sein. Die Stirnseiten können offen sein, um eine Federwirkung erzielen zu können. Der Querschnitt des Zusatzgehäuses 59 kann sich zu einer Stirnseite hin verjüngen, um das Zusatzgehäuse leicht in den Stutzen 9 einführen zu können. Das Zusatzgehäuse 59 kann dann wie ein Keil wirken. Durch anschließendes Herunterdrücken kann schließlich eine Klemmwirkung wie bei einem Keil erreicht werden. Das Zusatzgehäuse kann an seiner Unterseite einen vorstehenden Noppen aufweisen, der in eine Emulsionsöffnung 24 einrasten kann. Das Zusatzgehäuse kann aus einem Kunststoff oder einem Gummi gebildet sein.

Für eine Montage kann der Topf 6 der Küchenmaschine 3 auf die Basis 7 gesetzt werden. Danach kann die Adapter-Welle 47 auf das Mixmesser 64 drehfest aufgesetzt werden, das im Topf 6 vorhanden ist. Die erste Baueinheit 45 kann beispielsweise im Anschluss daran auf die Adapter-Welle 47 aufgesetzt oder in den Kragen 28 des Deckels 2 eingesetzt werden. Im Anschluss daran kann der Deckel 2 auf den Topf 6 der Küchenmaschine 3 aufgesetzt werden. Es kann nun ein Verriegeln möglich sein, um den Topf 6 mit der Basis 7 fest zu verbinden und/oder um den Deckel 2 mit dem Topf 6 fest zu verbinden. Es kann beispielsweise in einem nächsten Schritt zuerst die zweite Baueinheit 46 in den Stutzen 9 eingesetzt werden, um die beiden Baueinheiten 45 und 46 miteinander zu koppeln. Es kann danach das Zusatzgehäuse 59 in den Stutzen 9 eingesetzt werden. Es kann danach ein Zubehör mit der Zubehör-Anschlusswelle 57 drehfest verbunden werden. Das Einsetzen der zweiten Baueinheit 46 nebst Zusatzgehäuse 59 in den Stutzen 9 kann zweckmäßig auch zu einem früheren Zeitpunkt geschehen und zwar insbesondere vor einem Montieren der ersten Baueinheit 45.

In der Figur 7 wird ein Schnitt durch die erste Baueinheit 45 gezeigt, die die Anordnung der Zahnräder 40, 41 zeigt. Es wird eine Ausführung mit zwei Zahnrädern 41 gezeigt. Die Lagerstellen der Zahnräder 40, 41 sind zu sehen.

In der Figur 8 wird die Unterseite der ersten Baueinheit 45 mit einem rotierbaren Kupplungsabschnitt 60 gezeigt. Der Kupplungsabschnitt 60 ist drehfest mit dem Zahnrad 40 verbunden oder ist die Unterseite des Zahnrads 40. Der Kupplungsabschnitt 60 kann beispielsweise eine sternförmige Ausnehmung aufweisen, insbesondere wenn der Kupplungsabschnitt 49 der Adapter-Welle 47 ebenfalls entsprechend sternförmig ist.

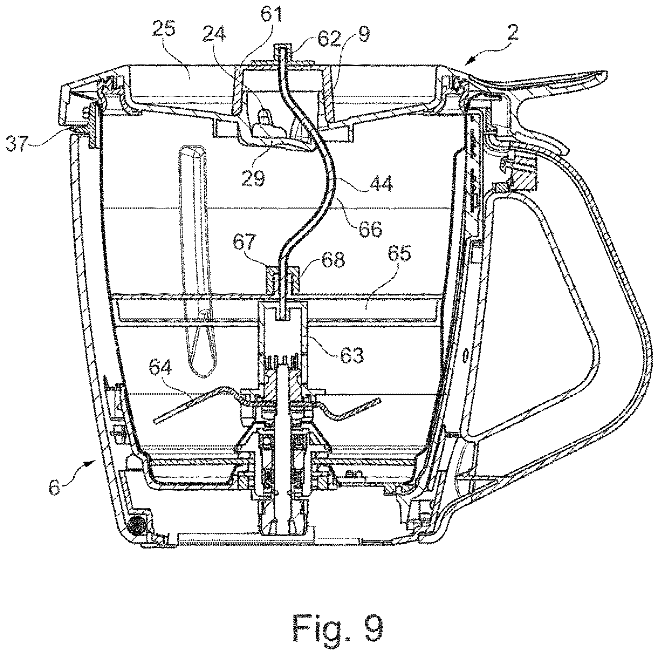

In der Figur 9 wird eine Ausgestaltung mit einer biegsamen Welle 44 in einer Schnittdarstellung gezeigt. Eine Baueinheit, die außerhalb des Topfes 6 anzuordnen ist, kann eine Kappe 61 umfassen, die beispielsweise klemmend oder mit geringem Spiel auf den Stutzen 9 aufgesetzt werden kann. Die Kappe 61 kann mit einer drehbar gelagerten Zubehör-Anschlusswelle 62 verbunden sein. An ihrer Oberseite kann die drehbar gelagerte Zubehör-Anschlusswelle 62 einen davon abweichenden Querschnitt aufweisen, um ein Drehmoment auf ein Element eines Zubehörs durch eine formschlüssige Verbindung übertragen zu können.

Die drehbar gelagerte Zubehör-Anschlusswelle 62 kann fest oder lösbar mit der biegsamen Welle 44 verbunden sein bzw. verbunden werden. Die Kappe 61 und die Zubehör-Anschlusswelle 62 können eine Baueinheit sein oder Teil einer Baueinheit sein.

Eine Adapter-Welle 63 kann mit dem im Grund des Topfes 6 angeordneten Mixmesser 64 drehfest gekoppelt werden. Die Adapter-Welle 63 kann dann bis zu einer mittleren Höhe des Topfes 6 reichen, so zum Beispiel bis zu einem mittleren Drittel.

Die Adapter-Welle 63 kann durch ein beispielsweise scheibenförmiges oder tellerförmiges Halteelement 65 an der Oberseite drehbar gehalten sein. Das Halteelement 65 kann an der Innenwand des Topfes 6 anliegen und so zu einem Halten beitragen. Das Halteelement 65 kann rotationsfest in dem Topf gehalten sein, zum Beispiel durch Anliegen an der Innenwand des Topfes 6. Das Halten kann durch eine entsprechende Kontur erfolgen, die mit der Kontur an der Innenseite des Topfes kooperiert.

Die biegsame Welle 44 kann beispielsweise drehfest in die obere Stirnseite der Adapter-Welle 63 hineingesteckt werden. Um die Lage der biegsamen Welle 44 zu stabilisieren, kann eine äußere Hülle 66 der biegsamen Welle 44 mit einer Kappe 67 verbunden sein. Die Kappe 67 kann ein Innengewinde aufweisen. Die Kappe 67 kann dann auf ein Außengewinde des Halteelements 65 aufgeschraubt werden. Die Kappe 67 kann aber auch anders befestigt werden, so zum Beispiel mithilfe einer Bajonettverbindung.

Es ist alternativ möglich, dass die biegsame Welle 44 fest und /oder dauerhaft unlösbar mit der Adapter-Welle 63 und/oder an dem scheibenförmigen oder tellerförmigen Halteelement 65 verbunden ist.

Es kann sein, dass die Kappe 67 durch einen Durchgang des Deckels 2 hindurchgesteckt werden kann. Dann kann die biegsame Welle 44 sowohl mit der Kappe 67 als auch mit der Zubehör-Anschlusswelle 62 dauerhaft fest verbunden sein.

## Patentansprüche

1. System mit einem Deckel (2) für eine Küchenmaschine, mit einer Öffnung im Deckel (2), mit einem Abdeckelement (29) unterhalb der Öffnung, mit einem Zubehör, wobei das Zubehör ein Element umfasst, das so eingerichtet ist, dass dieses durch einen Antrieb der Küchenmaschine (3) angetrieben werden kann, **gekennzeichnet durch** eine Kraftübertragungseinrichtung, die eine Rotationsbewegung durch die Öffnung im Deckel (2) hindurch übertragen kann.

2. System nach dem vorhergehenden Anspruch, **dadurch gekennzeichnet, dass** die Kraftübertragungseinrichtung Zahnräder (40, 41, 42, 43) und/oder eine flexible Welle (44) umfasst.

3. System nach einem der vorhergehenden Ansprüche, **dadurch gekennzeichnet, dass** die Kraftübertragungseinrichtung eine Baueinheit (45) umfasst, die unterhalb des Deckels (2) für einen Betrieb anzuordnen ist.

4. System nach dem vorhergehenden Anspruch, **dadurch gekennzeichnet, dass** die Baueinheit (45) zwei Zahnräder (40, 41) umfasst.

5. System nach einem der vorhergehenden Ansprüche, **dadurch gekennzeichnet, dass** die Kraftübertragungseinrichtung eine Baueinheit (46) umfasst, die oberhalb des Deckels (2) für einen Betrieb anzuordnen ist.

6. System nach dem vorhergehenden Anspruch, **dadurch gekennzeichnet, dass** die Baueinheit (46) zwei Zahnräder (42, 43) umfasst.

7. System nach einem der vorhergehenden Ansprüche, **dadurch gekennzeichnet, dass** der Deckel (2) einen nach unten abstehenden Kragen (28) umfasst und eine Baueinheit (45) der Kraftübertragungseinrichtung, die in den Kragen (28) einsetzbar ist.

8. System nach einem der vorhergehenden Ansprüche, **dadurch gekennzeichnet, dass** der Deckel (2) einen nach oben abstehenden Stutzen (9) umfasst und eine Baueinheit (46) der Kraftübertragungseinrichtung, die in den Stutzen (9) einsetzbar ist.

9. System nach dem vorhergehenden Anspruch, **dadurch gekennzeichnet, dass** ein Zusatzgehäuse (59) vorhanden ist, das wie ein Keil in den Stutzen (9) für ein klemmendes Halten der Baueinheit (46) eingesetzt werden kann.

10. System nach einem der vorhergehenden Ansprüche, **dadurch gekennzeichnet, dass** der Deckel (2) einen Stutzen (9) mit einer Emulsionsöffnung (24) umfasst und die Kraftübertragungseinrichtung ein Zahnrad (41) umfasst, das in die Emulsionsöffnung (24) hineinreicht.

11. System nach dem vorhergehenden Anspruch, **dadurch gekennzeichnet, dass** die Emulsionsöffnung (24) außermittig angeordnet ist.

12. System nach einem der vorhergehenden Ansprüche, **dadurch gekennzeichnet, dass** die Kraftübertragungseinrichtung eine Adapter-Welle (47, 63) mit nach unten abstehenden Armen (48) umfasst.

13. System nach einem der vorhergehenden Ansprüche, **dadurch gekennzeichnet, dass** das Zubehör eine Funktion erweitert und beispielsweise ein Gemüseschneider ist.

14. System nach einem der vorhergehenden Ansprüche, **dadurch gekennzeichnet, dass** das System einen Topf (6) einer Küchenmaschine und eine Basis (7) umfasst, die mit dem Topf (6) durch eine Verriegelungseinrichtung verbunden werden kann, umfasst.

15. System nach dem vorhergehenden Anspruch, **dadurch gekennzeichnet, dass** im Topf (6) ein Mixmesser (64) mit radial von einer Welle abstehenden Klingen angeordnet ist.
